# EUROPÄISCHE PATENTSCHRIFT

(11) **EP 1 325 833 B1**
(45) Veröffentlichungstag und Bekanntmachung des Hinweises auf die Patenterteilung: **05.03.2008**
(21) Anmeldenummer: 03006245.9
(22) Anmeldetag: 10.05.2000
(51) Int. Cl.: B60K 17/356, F16H 39/02

(54) **Hydrostatischer Fahrantrieb**
Hydrostatic drive
Entraînement hydrostatique

(30) Priorität: 21.05.1999 DE 19923516
(43) Veröffentlichungstag der Anmeldung: 09.07.2003
(62) Teilanmeldung aus: 00931191.1
(73) Patentinhaber: Bosch Rexroth AG, 97816 Lohr am Main (DE)
(72) Erfinder: Pekkanen, Jukka, 33720 Tampere (FI); Rinck, Stefan, 89264 Weissenhorn (DE); Brand, Michael, 89075 Ulm (DE)
(74) Vertreter: Körfer, Thomas

(56) Entgegenhaltungen:
- EP-A- 0 752 545
- EP-A- 0 916 541
- DE-A1- 2 528 735
- DE-A1- 19 750 367
- FR-A- 2 741 130
- GB-A- 1 341 361
- US-A- 4 635 743
- PATENT ABSTRACTS OF JAPAN Bd. 1996, Nr. 11, 29. November 1996 (1996-11-29) & JP 08 177010 A (KOMATSU ESUTO:KK;KOMATSU LTD), 9. Juli 1996 (1996-07-09)

## Beschreibung

Die Erfindung betrifft einen hydrostatischen Fahrantrieb zum Antrieb eines Fahrzeugs, insbesondere eines forstwirtschaftlichen Nutzfahrzeuges.

Ein hydrostatischer Fahrantrieb ist beispielsweise aus der DE 195 24 189 C2 bekannt. Bei diesem bekannten hydrostatischen Fahrantrieb wird mittels eines Verbrennungsmotors eine Hydropumpe angetrieben, die mit einem Hydromotor in einem geschlossenen Hydraulikkreislauf angeordnet ist. Sowohl die Hydropumpe als auch der Hydromotor sind über eine elektrisch angesteuerte Verstelleinrichtung in Abhängigkeit von durch eine elektrische Steuereinheit erzeugten elektrischen Steuersignalen verstellbar. Der Hydromotor treibt über ein Schaltgetriebe und ein Differentialgetriebe die Fahrzeugräder einer Fahrzeugachse an. Bei diesem hydrostatischen Fahrantrieb ist nachteilig, daß der Antrieb ausschließlich über einen geschlossenen Hydraulikkreislauf erfolgt. Die Anbindung des Hydromotors an die Hydropumpe ist relativ starr, so daß es bei einem Lastwechsel, insbesondere in unebenem und unwegsamen Gelände, häufig zum Durchrutschen der Antriebsräder kommt. Das mechanische Differentialgetriebe hat den Nachteil, daß im unwegsamen Gelände eine Differentialsperre erforderlich ist. Wenn das Differentialgetriebe gesperrt ist, tritt bei Kurvenfahrten jedoch zwangsläufig ein Schlupf an den Antriebsrädern auf, so daß es zu einer, insbesondere beim forstwirtschaftlichen Einsatz, möglichst zu vermeidenden Schädigung des Untergrunds kommt.

Mobile Arbeitsgeräte, die im unwegsamen Gelände eingesetzt werden, insbesondere forstwirtschaftliche Arbeitsgeräte, werden häufig mit zwei oder mehr angetriebenen Fahrzeugachsen ausgestattet, wobei ein Fahrzeuggelenk einen Winkelversatz zwischen den angetriebenen Fahrzeugachsen erlaubt, um dem mobilen Arbeitsgerät die notwendige Geländegängigkeit zu ermöglichen. Dabei stellt sich die Problematik des Antriebs der Fahrzeugachsen in besonderem Maße. Eine bekannte Lösung besteht darin, die Fahrzeugachsen über eine Kardanwelle zu verbinden. Dies fordert jedoch einen relativ hohen konstruktiven Aufwand. Die starre Kopplung der Fahrzeugachsen hat den Nachteil eines erhöhten Bodenabtrags. Durch die Kardanwelle ist zudem der maximale Winkelversatz der angetriebenen Fahrzeugachsen begrenzt.

Ferner ist es bekannt, die angetriebenen Fahrzeugachsen durch getrennte Hydromotoren anzutreiben, die mit einer gemeinsamen Hydropumpe durch einen geschlossenen Hydraulikkreislauf verbunden sind. Durch die feste hydraulische Kopplung besteht auch hier der Nachteil eines unerwünscht hohen Bodenabtrags. Bei mobilen Arbeitsgeräten, bei welchen die Hauptfunktion im hydraulischen Betrieb von Arbeitswerkzeugen besteht und dem hydrostatischen Antrieb lediglich eine Hilfsfunktion zukommt, ist es bekannt, den hydrostatischen Antrieb ausschließlich in einem offenen Hydraulikkreislauf zu betreiben. Nachteilig ist hierbei jedoch der geringe Wirkungsgrad und das geringe erzeugbare Drehmoment.

Aus der JP8-177 010 ist ein Fahrantrieb mit den Merkmalen des Oberbegriffes des Anspruchs 1 bekannt.

Der Erfindung liegt deshalb die Aufgabe zugrunde, einen hydrostatischen Fahrantrieb anzugeben, bei welchem sowohl ein hoher Wirkungsgrad und ein hohes Drehmoment als auch eine geringe Schädigung des Untergrunds erzielt werden.

Die Aufgabe wird durch die kennzeichnenden Merkmale des Anspruchs 1 in Verbindung mit den gattungsbildenden Merkmalen gelöst.

Erfindungsgemäß wird ein hydrostatischer Fahrantrieb geschaffen, der die Vorzüge eines Antriebs über einen offenen Hydraulikkreislauf mit den Vorzügen eines Antriebs über einen geschlossenen Hydraulikkreislauf miteinander verbindet. Erfindungsgemäß sind deshalb zwei Antriebsstränge vorgesehen. In einem ersten Antriebsstrang arbeitet eine erste Hydropumpe mit einem ersten Hydromotor in einem geschlossenen Hydraulikkreislauf zusammen, während in einem zweiten Arbeitsstrang eine zweite Hydropumpe mit einem zweiten Hydromotor in einem offenen Hydraulikkreislauf zusammenarbeitet. Die beiden Hydromotoren treiben dabei unterschiedliche Fahrzeugräder, vorzugsweise unterschiedliche Fahrzeugachsen, an. Mit dem Antriebsstrang mit geschlossenem Hydraulikkreislauf kann ein relativ hohes Drehmoment erzielt werden. In dem Antriebsstrang mit dem offenen Hydraulikkreislauf ist der Hydromotor relativ lose an die Hydropumpe angekoppelt, so daß sich die Drehzahl der von diesem Antriebsstrang angetriebenen Fahrzeugräder dynamisch an die durch die Bodenbeschaffenheit und Bodenhindernisse vorgegebenen Verhältnisse anpassen kann. Dadurch wird dem Umstand Rechnung getragen, daß die Drehzahl der beiden unterschiedlich angetriebenen Fahrzeugachsen beispielsweise dann in erheblichem Maße voneinander abweicht, wenn eine der beiden Fahrzeugachsen ein Hindernis überwindet. Werden die beiden Fahrzeugachsen, wie beim Stand der Technik, hydraulisch oder mechanisch starr miteinander gekoppelt, würde dies an einer der beiden Fahrzeugachsen zu einem Schlupf führen, welcher unvermeidlich eine Schädigung des Untergrunds verursacht. Durch die erfindungsgemäße relativ lose Ankopplung des Hydromotors an die Hydropumpe in einem der beiden Antriebsstränge, werden die beschriebenen Drehzahlunterschiede kurzzeitig in dem offenen Hydraulikkreislauf ausgeglichen. Da eine der Fahrzeugachsen jedoch über einen geschlossenen Hydraulikkreislauf angetrieben ist, läßt sich dennoch ein hohes Drehmoment erzeugen.

Die Unteransprüche betreffen vorteilhafte Weiterbildungen der Erfindung.

Es ist vorteilhaft, in der Vorlaufleitung des offenen Hydraulikkreislaufes ein Steuerventil anzuordnen. Vorzugsweise sind mit dem Steuerventil des offenen Hydraulikkreislaufes zwei Hydromotoren verbunden, die gegenüberliegende Fahrzeugräder einer Fahrzeugachse antreiben. Durch das Steuerventil können diesen Hydromotoren dann individuelle Volumenströme zugemessen werden, so daß sich bei geeigneter Ansteuerung des Steuerventils eine Differentialwirkung erreichen läßt. Gleichzeitig läßt sich das Fahrzeug über das unterschiedliche Zumessen der Volumenströme dieser beiden Hydromotoren auch lenken. Wenn die Fahrzeugachsen, wie bei forstwirtschaftlichen Nutzfahrzeugen üblich, nicht starr zueinander ausgerichtet sind, sondern in der Fahrzeugkarosserie ein Gelenk vorgesehen ist, welches einen Knickwinkel zwischen den Fahrzeugachsen erlaubt, so läßt sich dieser Knickwinkel durch unterschiedlichen Antrieb der mit dem Steuerventil verbundenen Hydromotoren gezielt vergrößern oder verringern.

Ferner können in dem Antriebsstrang mit offenem Hydraulikkreislauf die dort vorgesehenen Hydromotoren bei einem Schnelllaufbetrieb, beispielsweise auf einer Forststraße, abgeschaltet werden, so daß der Antrieb nur noch über den geschlossenen Hydraulikkreislauf erfolgt. Dies hat den Vorteil, daß die im offenen Kreislauf betriebenen Hydromotoren nicht mit hoher Drehzahl mitlaufen müssen.

Der offene Hydraulikkreislauf kann ferner gleichzeitig zum Antrieb weiterer hydraulischer Komponenten, z. B. einer Säge, eines Krans usw., dienen, ohne daß zum Antrieb dieser weiteren hydraulischen Komponenten eine zusätzliche Hydropumpe erforderlich wäre.

Die Erfindung wird nachfolgend unter Bezugnahme auf die Zeichnung näher beschrieben. In der Zeichnung zeigen:
- Fig. 1: ein hydraulisches Prinzipschaltbild eines ersten Ausführungsbeispiels der Erfindung;
- Fig. 2: ein elektronisches Prinzipschaltbild des ersten Ausführungsbeispiels der Erfindung;
- Fig. 3A: einen ersten Teil eines hydraulischen Schaltbilds eines zweiten Ausführungsbeispiels der Erfindung; und
- Fig. 3B: den zweiten Teil des hydraulischen Schaltbilds des zweiten Ausführungsbeispiels der Erfindung.

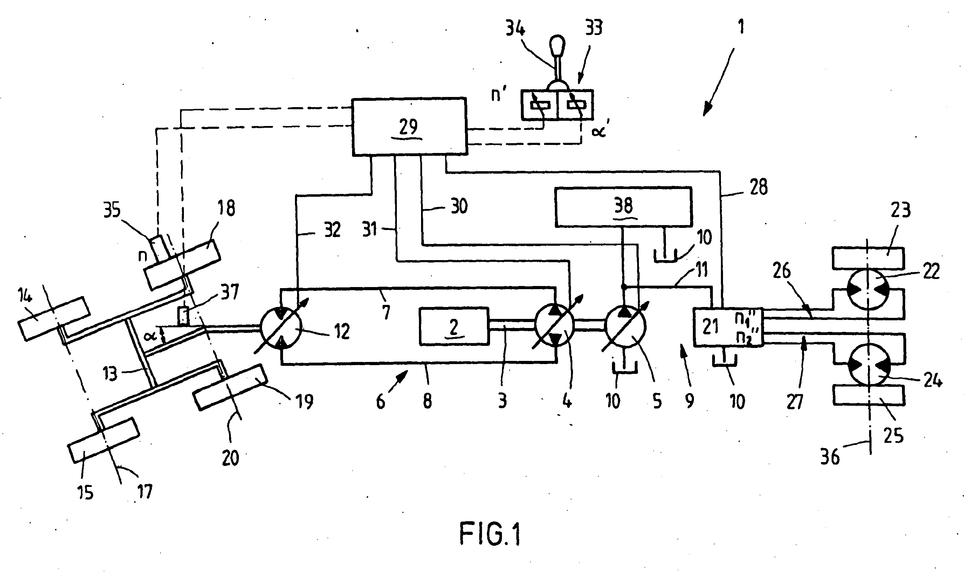

Fig. 1 zeigt die zum Verständnis der Erfindung notwendigen Komponenten des hydrostatischen Fahrantriebs 1 in einem hydraulischen Prinzipschaltbild.

Von einem Verbrennungsmotor 2, beispielsweise einem Dieselmotor, werden über eine gemeinsame Antriebswelle 3 eine erste Hydropumpe 4 und eine zweite Hydropumpe 5 angetrieben. Die Hydropumpen 4 und 5 können beispielsweise als kompakte Doppelpumpe ausgebildet sein. Der hydrostatische Fahrantrieb 1 verfügt erfindungsgemäß sowohl über einen geschlossenen Hydraulikkreislauf 6 mit einer Vorlaufleitung 7 und einer Rücklaufleitung 8 als auch über einen offenen Hydraulikkreislauf 9. In dem offenen Hydraulikkreislauf 9 saugt die Hydropumpe 5 das Hydraulikfluid aus einem Hydraulikfluid-Tank 10 an und speist es in eine Zulaufleitung 11 ein. Mit der Zulaufleitung 11 sind verschiedene hydraulische Verbraucher verbunden, die das Hydraulikfluid in den Hydraulikfluid-Tank 10 zurückfließen lassen.

In dem geschlossenen Hydraulikkreislauf 6 befindet sich zwischen der Vorlaufleitung 7 und der Rücklaufleitung 8 ein erster Hydromotor 12, der über einen mechanischen Antriebsstrang 13 die Fahrzeugräder 14 und 15 einer ersten Fahrzeugachse 17 und die Fahrzeugräder 18 und 19 einer dritten Fahrzeugachse 20 antreibt. In dem geschlossenen Hydraulikkreislauf ist die Funktion der Vorlauf- und Rücklaufleitung bei einer Umkehr der Drehrichtung des Hydromotors 12 vertauscht. Die Fahrzeugräder 14 bis 19 bilden im Ausführungsbeispiel die Vorderräder des anzutreibenden Fahrzeugs, beispielsweise eines forstwirtschaftlichen Nutzfahrzeugs.

In dem offenen Hydraulikkreislauf 9 befindet sich ein Steuerventil 21 zwischen der Zulaufleitung 11 und dem Hydraulikfluid-Tank 10. Mit dem Steuerventil 21 sind ein zweiter Hydromotor 22, welcher ein Fahrzeugrad 23 antreibt, und ein dritter Hydromotor 24, welcher ein Fahrzeugrad 25 antreibt, über hydraulische Kreisläufe 26 und 27 verbunden. Die hydraulischen Kreisläufe 26 und 27 sind im Ausführungsbeispiel als offene Hydraulikkreisläufe ausgebildet.

Das Steuerventil 21 ist über eine elektrische Steuerleitung 28 mit einer Fahrantriebssteuerung 29 verbunden, die über weitere elektrische Steuerleitungen 30, 31 und 32 mit Verstellvorrichtungen der Hydropumpen 4 und 5 und einer Verstellvorrichtung des Hydromotors 12 verbunden ist. Über einen Steuergeber 33 wird die Fahrantriebssteuerung 29 durch die Bedienperson angesteuert.

Die Fahrantriebssteuerung 29 kann als Folgeregelung arbeiten, wobei der Antrieb der Hinterräder 23 und 25 in Abhängigkeit von dem Antrieb der Vorderräder 14, 15, 18 und 19 erfolgt. Über den Hebel 34, beispielsweise einen Joystick, wird die von der Bedienperson gewünschte Fahrgeschwindigkeit des Fahrzeugs bzw. die dieser Fahrzeuggeschwindigkeit entsprechende Solldrehzahl n' vorgegeben. In der elektronischen Fahrantriebssteuerung 29 wird diese Solldrehzahl n' mit der Istdrehzahl n verglichen, die über einen Sensor 35 beispielsweise an der dritten Fahrzeugachse 20 ermittelt wird. Durch eine entsprechende Ansteuerung der Verstellvorrichtungen der Hydropumpe 4 und des Hydromotors 12 in dem geschlossenen Hydraulikkreislauf 6 wird die Istdrehzahl n an die Solldrehzahl n' angeglichen. Da die Ankopplung des Hydromotors 12 an die Hydropumpe 4 in dem geschlossenen Hydraulikkreislauf 6 relativ starr ist, kann in diesem Antriebsstrang ein relativ hohes Drehmoment auf die Fahrzeugräder 14, 15, 18 und 20 übertragen werden.

Das Steuerventil 21 in dem offenen Hydraulikkreislauf 9 wird durch die Fahrantriebssteuerung 29 so angesteuert, daß den Hydromotoren 22 und 24 ein solcher Volumenstrom zugemessen wird, daß die Antriebsräder 23 und 25 sich im wesentlichen schlupffrei drehen. Die von dem Steuerventil 21 separat für den zweiten Hydromotor 22 und den dritten Hydromotor 24 vorgegebenen Volumenströme entsprechen den Drehzahlen n1" bzw. n2" an den Fahrzeugrädern 23 bzw. 25. Wenn auf der Fahrstrecke ein Hindernis, beispielsweise ein Baumstamm, auftritt und deshalb beim Überwinden des Hindernisses kurzzeitig die von der Fahrantriebssteuerung ermittelten Drehzahlen n einerseits und n1" und n2" andererseits nicht mit den errechneten Werten übereinstimmen, so wird solch ein kurzzeitiger Drehzahlunterschied durch den erfindungsgemäßen hydrostatischen Fahrantrieb ausgeglichen, da die Hydromotoren 22 und 24 des offenen Hydraulikkreislaufes 9 mit der Hydropumpe 5 relativ lose gekoppelt sind. Ein hoher Schlupf, der zur Schädigung des Untergrundes führen würde, tritt nicht auf.

Bei Kurvenfahrten kann den beiden Hydromotoren 22 und 24 durch geeignetes Ansteuern des Steuerventils 21 durch die Fahrantriebssteuerung 29 ein derart unterschiedlicher Volumenstrom zugemessen werden, daß ein Differentialausgleich an der zweiten Fahrzeugachse 36 berücksichtigt wird. Ein Differentialgetriebe und eine Differentialsperre sind nicht erforderlich. Eine gegebenenfalls vorhandene Differentialsperre an der ersten und dritten Fahrzeugachse 17 und 20 muß im Regelfall nicht betätigt werden, da die Fahrzeugräder 23 und 25 der zweiten Fahrzeugachse 36 ständig zueinander gesperrt sind. Dies vermindert die Bodenschädigung.

Die Fahrzeugachsen 17 und 20 der Vorderräder 14, 15 18 und 19 können gegenüber der Fahrzeugachse 36 der Hinterräder 23 und 25 um einen Schwenkwinkel α geschwenkt werden, um eine höhere Geländegängigkeit des Fahrzeugs zu erreichen. Dazu ist an der nicht dargestellten Karosserie des Fahrzeugs ein entsprechendes Gelenk vorgesehen. Der Istknickwinkel α, den die Fahrzeugachsen 17 und 20 gegenüber der Fahrzeugachse 36 bilden, kann mit einem Sensor 37 erfaßt werden und von der Fahrantriebssteuerung 29 ausgewertet werden. Durch die mit dem Hebel 34 des Steuergebers 33 beeinflußbare Kurvensteuerung des Fahrzeugs wird ein Sollknickwinkel α' festgelegt, der der Fahrantriebssteuerung 29 ebenfalls zugeführt wird. Dem Steuerventil 21 wird über die Steuerleitung 28 dann ein Steuersignal so zugeführt, daß bei der Zumessung der Volumenströme für die beiden Hydromotoren 22 und 24 der Knickwinkel α und der sich daraus ergebende Kurvenradius berücksichtigt wird. Zur Anpassung des Istknickwinkels α an den Sollknickwinkel α' kann über das Steuerventil 21 an den Hydromotoren 22 und 24 eine zusätzliche Drehzahldifferenz erzeugt werden, so daß durch das Steuerventil 21 eine Lenkung des Fahrzeugs möglich wird.

Der offene Hydraulikkreislauf 9 kann gleichzeitig zum Antrieb weiterer hydraulischer Komponenten, beispielsweise eines Krans, einer Säge oder eines Harvester-Kopfes dienen. Diese weiteren hydraulischen Komponenten sind in Fig. 1 mit dem Bezugszeichen 38 schematisch angedeutet. Vorteilhaft ist eine weitere Hydropumpe zum Antrieb dieser weiteren hydraulischen Komponenten 38 nicht erforderlich, sondern die zweite Hydropumpe 5 dient sowohl für den hydrostatischen Teilantrieb mittels des offenen Hydraulikkreislaufes 9 als auch zum Antrieb dieser zusätzlichen hydraulischen Komponenten 38.

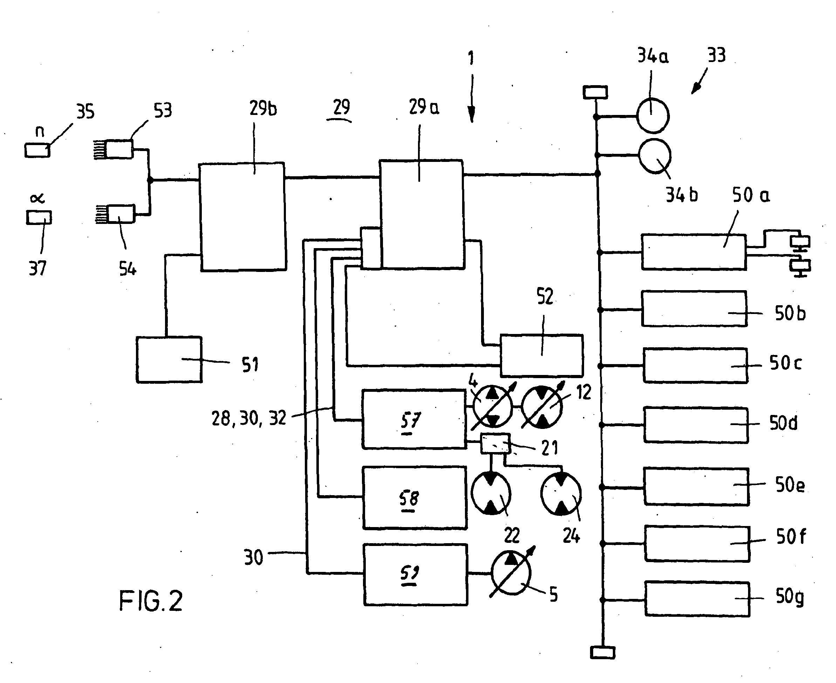

Fig. 2 zeigt ein elektronisches Prinzipschaltbild des erfindungsgemäßen hydrostatischen Fahrantriebs 1 entsprechend dem in Fig. 1 dargestellten Ausführungsbeispiel.

Der Steuergeber 33 umfaßt im Ausführungsbeispiel zwei Steuerhebel 34a und 34b, die über ein elektrisches Bussystem einerseits mit der Fahrantriebssteuerung 29 als auch andererseits unmittelbar mit verschiedenen hydraulischen Komponenten 50a bis 50g des anzutreibenden Fahrzeugs verbunden sind, die Arbeitsfunktionen am Kran erfüllen, wie Schwenken, Heben sowie Betätigung von Ausleger, Teleskop, Kranfuß und Lenkung. Diese hydraulischen Komponenten 50a bis 50g sind ihrerseits mit der Zulaufleitung 11 des offenen Hydraulikkreislaufes 9 vorzugsweise über Load-Sensing-Ventile verbunden. Die Ansteuerung über das Bussystem ist im Vergleich zu einer hydraulischen Ansteuerung relativ flexibel und einfach im Aufbau.

Die Fahrantriebssteuerung 29 besteht aus der eigentlichen Steuerkomponente 29a und der Fahrzeugelektrik 29b. Die Fahrzeugelektrik 29b verfügt über Ein/Ausgänge 53 und 54, an welchen beispielsweise die Sensoren 35 und 37 angeschlossen sein können. An diesen Ein/Ausgängen 53, 54 können jedoch auch beispielsweise Beleuchtungskomponenten des Fahrzeugs oder andere Bedienkomponenten angeschlossen sein. Die Fahrzeugelektrik 29b verfügt über ein Display 51, über welches die Funktionen des Fahrzeugs durch die Bedienperson überwacht werden können. Sämtliche Komponenten sind über Bussysteme miteinander verbunden. Über die Fahrantriebssteuerung 29 erfolgt beschriebener Weise die Ansteuerung des Fahrantriebs der Vorderachsen 17, 20 und der Hinterachse 36 über die Hydropumpe 4 und den Hydromotor 12 des geschlossenen Hydraulikkreislaufes 6 bzw. das Steuerventil 21 des offenen Hydraulikkreislaufes 9. Ferner wird der Schwenkwinkel der als Arbeitspumpe dienenden zweiten Hydropumpe 5 durch ein entsprechendes elektronisches Steuersignal festgelegt. Auch der Harvester-Kopf 52 wird auf diese Weise angesteuert. Hierzu sind elektronisch ansteuerbare Steuerempfänger 57 - 59 vorgesehen. Der Steuerempfänger 57 dient zur Ansteuerung des Fahrantriebs, der Steuerempfänger 58 dient zur Ansteuerung der Lenkung und der Steuerempfänger 59 dient zur Ansteuerung der zweiten Hydropumpe 5.

Die elektronischen Steuerkomponenten gewährleisten eine hohe Flexibilität. Durch den modularen Aufbau läßt sich das System ohne weiteres für neue Komponenten erweitern.

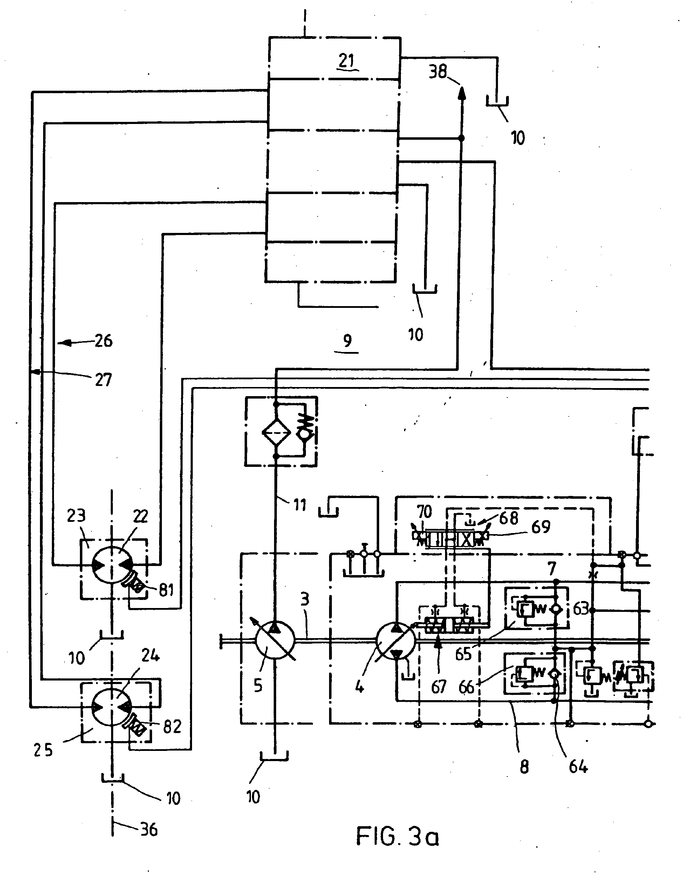

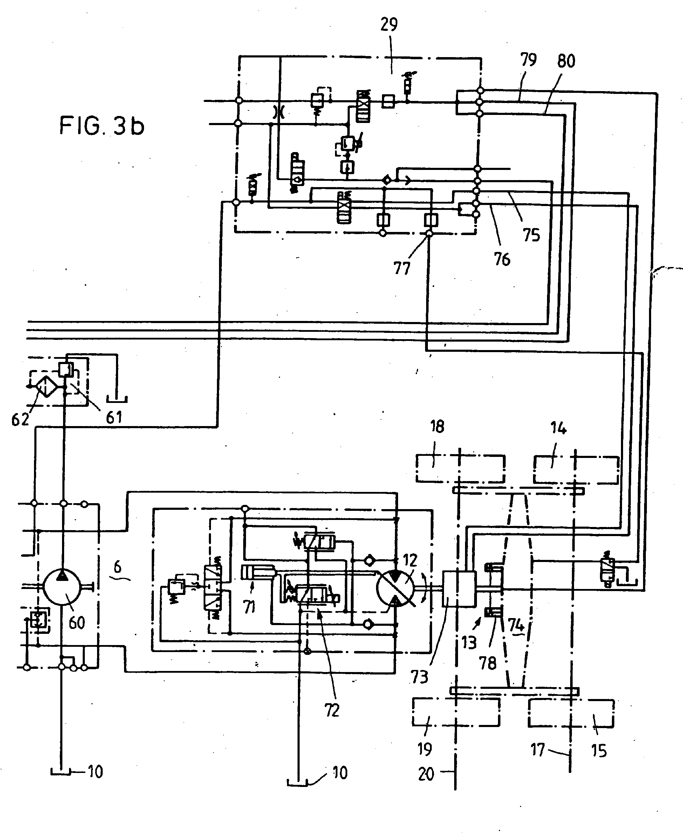

Die Figuren 3A und 3B zeigen ein Ausführungsbeispiel des erfindungsgemäßen Fahrantriebs in einer gegenüber Fig. 1 detaillierteren Darstellung. Zur Erleichterung der Zuordnung sind bereits beschriebene Komponenten mit übereinstimmenden Bezugszeichen versehen.

Ein in den Figuren 3A und 3B nicht dargestellter Verbrennungsmotor treibt die Antriebswelle 3 und somit die erste Hydropumpe 4 und die zweite Hydropumpe 5 an. Die zweite Hydropumpe 5 speist das von dem Hydraulikfluid-Tank 10 angesaugte Hydraulikfluid in die Vorlaufleitung 11 ein. In der Zulaufleitung 11 des offenen Hydraulikkreislaufs 9 befindet sich das Steuerventil 21, das den Volumenstrom individuell über die Hilfskreisläufe 26 und 27 dem zweiten Hydromotor 22 und dem dritten Hydromotor 24 zuführt.

Der geschlossene Hydraulikkreislauf 6 umfaßt die Hydropumpe 4 und den Hydromotor 12, die über die Leitungen 7 und 8 verbunden sind. Auf der Antriebswelle 3 befindet sich eine Hilfspumpe 60, die Hydraulikfluid über ein Druckbegrenzungsventil 61 und ein Filter 62 sowie eines der beiden Rückschlagventile 63 und 64 in die gerade Niederdruck führende Leitung 7 oder 8 einspeist. Zur Druckbegrenzung der gerade Hochdruck führenden Leitung 7 bzw. 8 dienen zwei Druckbegrenzungsventile 65 und 66. Die Verstellvorrichtung 67 der Hydropumpe 4 wird über ein Vorsteuerventil 68 mittels zweier Elektromagneten 69 und 70 elektromagnetisch verstellt. In entsprechender Weise wird die Verstellvorrichtung 71 des ersten Hydromotors 12 über ein elektromagnetisch verstellbares Steuerventil 72 elektrisch angesteuert. Zwischen der ersten Hydropumpe 12 und den Fahrzeugrädern 14, 15, 18 und 19 befindet sich ein zweistufiges Schaltgetriebe 73, um den Wirkungsgrad des Antriebsstrangs über den geschlossenen Hydraulikkreislauf 6 zu erhöhen. Dem mechanischen Schaltgetriebe 73 ist ein Differentialgetriebe 74 nachgeschaltet. Ein Teil der Fahrantriebssteuerung 29 ist im dargestellten Ausführungsbeispiel hydraulisch ausgebildet, wobei zwei Steuerausgänge 75 und 76 der Fahrantriebssteuerung 29 das Schaltgetriebe 73 ansteuern. Ein Steuerausgang 77 der Fahrantriebssteuerung 29 steuert eine Bremseinrichtung 78 der vorderen Fahrzeugachsen 17 und 20 an, während zwei Steuerausgänge 79 bzw. 80 zwei Bremseinrichtungen 81 bzw. 82 des zweiten Hydromotors 22 bzw. des dritten Hydromotors 24 ansteuern. Die Bremseinrichtungen 78, 81 und 82 dienen dem raschen Stillsetzen des Fahrantriebs beim Abbremsen des Fahrzeugs.

Die Erfindung vereint die Vorteile eines Antriebs mit geschlossenem Hydraulikkreislauf 6 mit den Vorteilen eines Antriebs mit offenem Hydraulikkreislauf 9. Die Fahrantriebssteuerung 29 kann neben der Kurvensteuerung auch die Funktion der Niveauregulierung der Antriebsräder übernehmen. Die Hydropumpe 4 und 5 sind vorzugsweise so dimensioniert, daß sie einen ausreichenden Förderstrom bereits bei niedriger Drehzahl zur Verfügung stellen, um eine unnötige Geräuschentwicklung zu vermeiden. Die Funktionen des hydrostatischen Fahrantriebs und die Funktionen der zusätzlichen hydraulischen Komponenten 38 bzw. 50a bis 50g können mit vorgegebenen Prioritäten versehen werden, so daß beim Erreichen des maximalen Fördervolumens der Hydropumpe 5 nur bestimmte bevorzugte Funktionen, beispielsweise der Fahrantrieb und die Kurvensteuerung, aufrecht erhalten werden.

Zusammenfassend betrifft die Erfindung einen hydrostatischen Fahrantrieb 1 mit einer ersten Hydropumpe 4 und einem mit der ersten Hydropumpe 4 in einem geschlossenen Hydraulikkreislauf 6 über eine Vorlaufleitung 7 und eine Rücklaufleitung 8 verbundenen ersten Hydromotor 12, der zumindest ein erstes Fahrzeugrad 14, 15, 18, 19 antreibt. Außerdem ist eine zweite Hydropumpe 5 und ein mit der zweiten Hydropumpe 5 in einem offenen Hydraulikkreislauf (9) über eine Zulaufleitung 11 verbundenen zweiten Hydromotor 22 vorhanden, der zumindest ein zweites Fahrzeugrad 23 antreibt. Die Rückführung des Hydraulikfluids von dem zweiten Hydromotor 22 zu der zweiten Hydropumpe 5 erfolgt über einen Hydraulikfluid-Tank 10.

Vorzugsweise ist in der Zulaufleitung 11 des offenen Hydraulikkreislaufs 9 ein Steuerventil 21 angeordnet, das dem zweiten Hydromotor 22 einen variablen Volumenstrom zuführt, der von einem das Steuerventil 21 ansteuernden Steuersignal abhängig ist.

Vorzugsweise treibt der erste Hydromotor 12 die Fahrzeugräder 14, 15 zumindest einer ersten Fahrzeugachse 17 an, und an dem Steuerventil 21 neben dem zweiten Hydromotor 22 ist ein dritter Hydromotor 24 angeschlossen, wobei der zweite Hydromotor 22 und der dritte Hydromotor 24 gegenüberliegende Fahrzeugräder 23, 25 einer zweiten Fahrzeugachse 36 antreiben und das Steuerventil 21 so ausgebildet ist, daß es in Abhängigkeit von dem Steuersignal dem zweiten Hydromotor 22 und dem dritten Hydromotor 23 separate, variable Volumenströme zuführt.

Vorzugsweise sind der zweite und der dritte Hydromotor 22, 24 über das Steuerventil 21 mit dem Hydraulikfluid-Tank 10 verbunden.

Vorzugsweise ist mit dem Steuerventil 21 eine Fahrantriebssteuerung 29 verbunden, die in Abhängigkeit von einem erfaßten Istknickwinkel α zwischen der ersten Fahrzeugachse 17 und der zweiten Fahrzeugachse 36 und/oder einer erfaßten Istdrehzahl n zumindest einer der Fahrzeugachsen 17, 36 das Steuerventil 21 so ansteuert, daß dieses dem zweiten und dritten Hydromotor 22, 24 solche separate Volumenströme zuführt, daß sich die Fahrzeugräder 23, 25 der zweiten Fahrzeugachse 36 schlupffrei drehen.

Vorzugsweise steuert die Fahrantriebssteuerung 29 in Abhängigkeit von einem mittels eines Steuergebers 33 vorgebbaren Sollknickwinkel α' zwischen der ersten Fahrzeugachse 17 und der zweiten Fahrzeugachse 36 und/oder einer vorgebbaren Solldrehzahl n' das Steuerventil 21 so an, daß dieses dem zweiten und dritten Hydromotor 22, 24 solche separate Volumenströme zuführt, daß sich der Istknickwinkel α an den Sollknickwinkel α' und/oder die Istdrehzahl n an die Solldrehzahl n' annähert.

Vorzugsweise steuert die Fahrantriebssteuerung 29 das Steuerventil 21 und/oder Verstellvorrichtungen 67 der Hydropumpen 4, 5 und/oder eine Verstellvorichtung 71 des ersten Hydromotors 12 elektrisch an.

Vorzugsweise schaltet oberhalb einer Grenzgeschwindigkeit eines mittels des hydrostatischen Fahrantriebs 1 angetriebenen Fahrzeugs das Steuerventil 21 die daran angeschlossenen Hydromotoren 22, 24 in einen Freilaufbetrieb um und der Antrieb erfolgt dann ausschließlich über den geschlossenen Hydraulikkreislauf 6.

Vorzugsweise werden von dem offenen Hydraulikkreislauf 9 weitere hydraulische Komponenten 38, 50a-50g, insbesondere die hydraulischen Komponenten eines Krans, angetrieben.

Vorzugsweise werden die erste Hydropumpe 4 und die zweite Hydropumpe 5 von einem gemeinsamen Verbrennungsmotor 2 angetrieben.

## Patentansprüche

1. Hydrostatischer Fahrantrieb (1) mit einer ersten Hydropumpe (4) und einem mit der ersten Hydropumpe (4) in einem geschlossenen Hydraulikkreislauf (6) über eine Vorlaufleitung (7) und eine Rücklaufleitung. (8) verbundenen ersten Hydromotor (12), der zumindest ein erstes Fahrzeugrad (14, 15, 18, 1.9) antreibt,
mit einer zweiten Hydropumpe (5) und einem mit der zweiten Hydropumpe (5) in einem offenen Hydraulikkreislauf (9) über eine Zulaufleitung (11) verbundenen zweiten Hydromotor (22), der zumindest ein zweites Fahrzeugrad (23) antreibt, wobei die Rückführung des Hydraulikfluids von dem zweiten Hydromotor (22) zu der zweiten Hydropumpe (5) über einen Hydraulikfluid-Tank (10) erfolgt,
wobei in der Zulaufleitung (11) des offenen Hydraulikkreislaufs (9) ein Steuerventil (21) angeordnet ist, das dem zweiten Hydromotor (22) einen variablen Volumenstrom zuführt, der von einem das Steuerventil (21) ansteuernden Steuersignal abhängig ist,
**dadurch gekennzeichnet,**
**daß** oberhalb einer Grenzgeschwindigkeit eines mittels des hydrostatischen Fahrantriebs (1) angetriebenen Fahrzeugs das Steuerventil (21) die daran angeschlossenen Hydromotoren (22, 24) in einen Freilaufbetrieb umschaltet und der Antrieb dann ausschließlich über den geschlossenen Hydraulikkreislauf (6) erfolgt.

2. Hydrostatischer Fahrantrieb nach Anspruch 1,
**dadurch gekennzeichnet,**
**daß** der erste Hydromotor (12) die Fahrzeugräder (14, 15) zumindest einer ersten Fahrzeugachse (17) antreibt, und daß an dem Steuerventil (21) neben dem zweiten Hydromotor (22) ein dritter Hydromotor (24) angeschlossen ist, wobei der zweite Hydromotor (22) und der dritte Hydromotor (24) gegenüberliegende Fahrzeugräder (23, 25) einer zweiten Fahrzeugachse (36) antreiben und das Steuerventil (21) so ausgebildet ist, daß es in Abhängigkeit von dem Steuersignal dem zweiten Hydromotor (22) und dem dritten Hydromotor (23) separate, variable Volumenströme zuführt.

3. Hydrostatischer Fahrantrieb nach Anspruch 2,
**dadurch gekennzeichnet,**
**daß** der zweite und der dritte Hydromotor (22, 24) über das Steuerventil (21) mit dem Hydraulikfluid-Tank (10) verbunden sind.

4. Hydrostatischer Fahrantrieb nach Anspruch 2 oder 3,
**dadurch gekennzeichnet,**
**daß** mit dem Steuerventil (21) eine Fahrantriebssteuerung (29) verbunden ist, die in Abhängigkeit von einem erfaßten Istknickwinkel (α) zwischen der ersten Fahrzeugachse (17) und der zweiten Fahrzeugachse (36) und/oder einer erfaßten Istdrehzahl (n) zumindest einer der Fahrzeugachsen (17, 36) das Steuerventil (21) so ansteuert, daß dieses dem zweiten und dritten Hydromotor (22, 24) solche separate Volumenströme zuführt, daß sich die Fahrzeugräder (23, 25) der zweiten Fahrzeugachse (36) schlupffrei drehen.

5. Hydrostatischer Fahrantrieb nach Anspruch 4,
**dadurch gekennzeichnet,**
**daß** die Fahrantriebssteuerung (29) in Abhängigkeit von einem mittels eines Steuergebers (33) vorgebbaren Sollknickwinkel (α') zwischen der ersten Fahrzeugachse (17) und der zweiten Fahrzeugachse (36) und/oder einer vorgebbaren Solldrehzahl (n') das Steuerventil (21) so ansteuert, daß dieses dem zweiten und dritten Hydromotor (22, 24) solche separate Volumenströme zuführt, daß sich der Istknickwinkel (α) an den Sollknickwinkel (α') und/oder die Istdrehzahl (n) an die Solldrehzahl (n') annähert.

6. Hydrostatischer Fahrantrieb nach Anspruch 4 oder 5,
**dadurch gekennzeichnet,**
**daß** die Fahrantriebssteuerung (29) das Steuerventil (21) und/oder Verstellvorrichtungen (67) der Hydropumpen (4, 5) und/oder eine Verstellvorichtung (71) des ersten Hydromotors (12) elektrisch ansteuert.

7. Hydrostatischer Fahrantrieb nach einem der vorherigen Ansprüche,
**dadurch gekennzeichnet,**
**daß** von dem offenen Hydraulikkreislauf (9) weitere hydraulische Komponenten (38, 50a-50g), insbesondere die hydraulischen Komponenten eines Krans, angetrieben werden.

8. Hydrostatischer Fahrantrieb nach einem der vorherigen Ansprüche,
**dadurch gekennzeichnet,**
**daß** die erste Hydropumpe (4) und die zweite Hydropumpe (5) von einem gemeinsamen Verbrennungsmotor (2) angetrieben werden.

## Claims

1. Hydrostatic travel drive (1) having a first hydraulic pump (4) and a first hydraulic motor (12) which is connected to the first hydraulic pump (4) in a closed hydraulic circuit (6) by means of a flow line (7) and a return line (8) and which drives at least a first vehicle wheel (14, 15, 18, 19),
having a second hydraulic pump (5) and a second hydraulic motor (22) which is connected to the second hydraulic pump (5) in an open hydraulic circuit (9) by means of a supply line (11) and which drives at least a second vehicle wheel (23), the return of the hydraulic fluid from the second hydraulic motor (22) to the second hydraulic pump (5) being carried out via a hydraulic fluid tank (10),
a control valve (21) being arranged in the supply line (11) of the open hydraulic circuit (9) and supplying the second hydraulic motor (22) with a variable flow volume which is dependent on a control signal which controls the control valve (21),
**characterised in that**
above a limit speed of a vehicle which is driven by means of the hydrostatic travel drive (1), the control valve (21) switches the hydraulic motors (22, 24) which are connected thereto to free-running operation and the driving is then carried out exclusively via the closed hydraulic circuit (6).

2. Hydrostatic travel drive according to claim 1,
**characterised in that**
the first hydraulic motor (12) drives the vehicle wheels (14, 15) of at least a first vehicle axle (17) and **in that**, in addition to the second hydraulic motor (22), a third hydraulic motor (24) is connected to the control valve (21), the second hydraulic motor (22) and the third hydraulic motor (24) driving opposing vehicle wheels (23, 25) of a second vehicle axle (36) and the control valve (21) being constructed in such a manner that, in accordance with the control signal, it supplies separate variable flow volumes to the second hydraulic motor (22) and the third hydraulic motor (23).

3. Hydrostatic travel drive according to claim 2,
**characterised in that**
the second and the third hydraulic motor (22, 24) are connected to the hydraulic fluid tank (10) by means of the control valve (21).

4. Hydrostatic travel drive according to claim 2 or 3,
**characterised in that**
a travel drive control unit (29) is connected to the control valve (21) and, in accordance with a detected actual angle of bend (α) between the first vehicle axle (17) and the second vehicle axle (36) and/or a detected actual speed (n) of at least one of the vehicle axles (17, 36), controls the control valve (21) in such a manner that the control valve supplies such separate flow volumes to the second and third hydraulic motor (22, 24) that the vehicle wheels (23, 25) of the second vehicle axle (36) rotate in a slip-free manner.

5. Hydrostatic travel drive according to claim 4,
**characterised in that**
the travel drive control unit (29), in accordance with a desired angle of bend (α') which can be determined by means of a control sensor (33) between the first vehicle axle (17) and the second vehicle axle (36) and/or a desired speed (n') which can be determined, controls the control valve (21) in such a manner that the control valve supplies such separate flow volumes to the second and third hydraulic motor (22, 24) that the actual angle of bend (α) becomes more similar to the desired angle of bend (α') and/or the actual speed (n) becomes more similar to the desired speed (n').

6. Hydrostatic travel drive according to claim 4 or 5,
**characterised in that**
the travel drive control unit (29) electrically controls the control valve (21) and/or adjustment devices (67) of the hydraulic pumps (4, 5) and/or an adjustment device (71) of the first hydraulic motor (12).

7. Hydrostatic travel drive according to any one of the preceding claims,
**characterised in that**
further hydraulic components (38, 50a-50g), in particular the hydraulic components of a crane, are driven by the open hydraulic circuit (9).

8. Hydrostatic travel drive according to any one of the preceding claims,
**characterised in that**
the first hydraulic pump (4) and the second hydraulic pump (5) are driven by means of a common internal combustion engine (2).

## Revendications

1. Entraînement hydrostatique (1) avec une première pompe hydraulique (4) et un premier moteur hydraulique (12) relié à la première pompe hydraulique (4) par une conduite d'alimentation (7) et une conduite de retour (8) dans un circuit hydraulique fermé (6), lequel moteur entraîne au moins une première roue de véhicule (14, 15, 18, 19),
avec une deuxième pompe hydraulique (5) et avec un deuxième moteur hydraulique (22) relié à la deuxième pompe hydraulique (5) par une conduite d'arrivée (11) dans un circuit hydraulique ouvert (9), lequel moteur entraîne au moins une deuxième roue de véhicule (23), le retour du fluide hydraulique depuis le deuxième moteur hydraulique (22) jusqu'à la deuxième pompe hydraulique (5) s'effectuant par un réservoir de fluide hydraulique (10),
la conduite d'arrivée (11) du circuit hydraulique ouvert (9) présentant une soupape de commande (21) qui alimente le deuxième moteur hydraulique (22) en un débit volumique variable qui est fonction d'un signal de commande actionnant la soupape de commande (21),
**caractérisé en ce que**,
au-dessus d'une vitesse limite d'un véhicule entraîné au moyen de l'entraînement hydrostatique (1), la soupape de commande (21) commute les moteurs hydrauliques (22, 24) qui y sont raccordés en régime à roue libre et l'entraînement s'effectue alors exclusivement par le circuit hydraulique fermé (6).

2. Entraînement hydrostatique selon la revendication 1,
**caractérisé en ce que**,
le premier moteur hydraulique (12) entraîne les roues de véhicule (14, 15) d'au moins un premier essieu de véhicule (17), et un troisième moteur hydraulique (24) est raccordé à la soupape de commande (21) à côté du deuxième moteur hydraulique (22), le deuxième moteur hydraulique (22) et le troisième moteur hydraulique (24) entraînant des roues de véhicule opposées (23, 25) d'un deuxième essieu de véhicule (36) et la soupape de commande (21) étant conçue de telle façon qu'elle alimente en débits volumiques variables séparés, le deuxième moteur hydraulique (22) et le troisième moteur hydraulique (23) en fonction du signal de commande.

3. Entraînement hydrostatique selon la revendication 2,
**caractérisé en ce que**,
le deuxième et le troisième moteur hydraulique (22, 24) sont reliés au réservoir de fluide hydraulique (10) par la soupape de commande (21).

4. Entraînement hydrostatique selon la revendication 2 ou 3,
**caractérisé en ce que**,
à la soupape de commande (21) est reliée une commande d'entraînement (29) qui, en fonction d'un angle d'inflexion réel enregistré (α) entre le premier axe de véhicule (17) et le deuxième axe de véhicule (36) et/ou d'un régime réel enregistré (n) d'au moins un des essieux de véhicule (17, 36), actionne la soupape de commande (21) de telle sorte que celle-ci alimente le deuxième et le troisième moteurs hydrauliques (22, 24) en de tels débits volumiques séparés que les roues de véhicule (23, 25) du deuxième axe de véhicule (36) tournent sans glissement.

5. Entraînement hydrostatique selon la revendication 4,
**caractérisé en ce que**,
la commande d'entraînement (29), en fonction d'un angle d'inflexion théorique (α') entre le premier axe de véhicule (17) et le deuxième axe de véhicule (36) pouvant être déterminé au moyen d'un émetteur de commande (33) et/ou d'un régime théorique prédéterminé (n'), actionne la soupape de commande (21) de telle façon que celle-ci alimente le deuxième et le troisième moteurs hydrauliques (22, 24) en de tels débits volumiques séparés que l'angle d'inflexion réel (α) s'approche de l'angle d'inflexion théorique (α') et/ou le régime réel (n) s'approche du régime théorique (n').

6. Entraînement hydrostatique selon la revendication 4 ou 5,
**caractérisé en ce que**,
la commande d'entraînement (29) actionne électriquement la soupape de commande (21) et/ou des dispositifs de réglage (67) des pompes hydrauliques (4, 5) et/ou un dispositif de réglage (71) du premier moteur hydraulique (12).

7. Entraînement hydrostatique selon l'une quelconque des revendications précédentes,
**caractérisé en ce que**,
d'autres composants hydrauliques (38, 50a-50g), en particulier les composants hydrauliques d'une grue, sont entraînés par le circuit hydraulique ouvert (9).

8. Entraînement hydrostatique selon l'une quelconque des revendications précédentes,
**caractérisé en ce que**,
la première pompe hydraulique (4) et la deuxième pompe hydraulique (5) sont entraînées par un moteur à combustion commun (2).
